# EUROPEAN PATENT APPLICATION

(11) **EP 4 245 710 A1**
(43) Date of publication of application: **20.09.2023**
(21) Application number: 21891283.0
(22) Date of filing: 05.11.2021
(51) Int. Cl.: B66B 21/12, B65G 37/00, B65G 15/12, B65G 15/62

(54) **MECHANICAL CARPET FOR TRANSPORT LINES**

(30) Priority: 13.11.2020 ES 202031143
(71) Applicant: Hernández de Antonio, Carlos, 28004 Madrid (ES)
(72) Inventor: Hernández de Antonio, Carlos, 28004 Madrid (ES)
(74) Representative: Ungria López, Javier
(86) International application number: PCT/ES2021/070798
(87) International publication number: WO 2022/101529

(57) **Abstract**

Mechanical carpet for transport lines, characterised in that it comprises at least one section (1) with a plurality of parallel guides (3) forming a loop, and along each one thereof runs a displaceable element (4) having chain-like links (5) whose upper surfaces (7) establish a resting surface for the transport of persons and/or objects. It further comprises a simultaneous traction mechanism (8) for the displaceable elements to enable said transport.

Preferably, it comprises three or more sections (1), where the end sections for entry and exit run at a speed V1 that enables the entry and exit of persons and/or objects, where the remainder of the sections run at speeds greater than V1, to reduce the transport time, enabling the execution of progressive changes of speed at consecutive sections, this in a manner feasible for persons, further reducing the transport time.

## Description

### Object of the invention

The present invention relates to a mechanical carpet for transport lines, designed to carry out the transport of persons and/or objects, and enables a reduction of the transport time, for which it comprises at least three adjacent sections, in such a way that the end sections for entry and exit ends run at a speed V1 that enables the entry and exit of persons and/or objects, and the sections adjacent to said sections for entry and exit run at a speed greater than V1, which reduces transport time.

The invention provides for the possibility of including a plurality of adjacent sections arranged between the end sections for entry and exit, in such a way that in each adjacent section it is possible to make progressive changes in speed, which makes it possible to reduce the transport time as the length of the transport line increases.

The invention is applicable to any sector of the industry in which the transport of objects and/or people is required, such as production lines, belts for the transport of persons and objects in airports, subways, train lines, on the street, etc.

### Background of the invention

It is known in the state of the art to use transport lines for persons and/or objects comprising a plurality of mobile elements, linked one after the other, and which, by means of a traction mechanism, are displaced at a constant speed, and by means of two mechanisms for changing direction provided at the ends of the path of the transport line, the belt circuit is closed, making a round trip loop to enable successive transport cycles to be carried out.

These transport belts have the drawback that the displacement speed is always the same, that is, it is maintained at a constant speed along the entire path, the value of which is imposed by the speed at which persons can enter and exit the belt without losing balance to prevent them from having an accident. In addition, this speed is limited so that older persons can use the transport belt without suffering an accident, whereby the transport speed is reduced to a greater extent, and consequently the transport time is long, especially in very long transport belts, for example, in belts of more than 50 m long, as occurs in many airports.

To solve this problem, mechanisms such as those described in patent documents US 3583543 A and ES 2768429 A1 have been developed, which documents describe a speed control system for mobile elements in series for transport lines for persons, comprising a central guide, two lateral guides, and a succession of quadrangular structures articulated at their vertices, forming an alignment of central vertices, guided in the central guide, and two alignments of lateral vertices, guided in the lateral guides. Each mobile element is attached to at least one of the central vertices of a quadrangular structure to carry out its guided displacement. The lateral guides comprise a parallel configuration that maintains a low speed in the areas for entry to/exit from the line for persons and/or objects, to facilitate their entry/exit; a convergent/divergent configuration to increase/decrease the speed before the areas for entry/exit and a parallel configuration with less separation than in the entry/exit to maintain a higher speed in the central section of the line, reducing the transport time.

These configurations have the drawback of being complex structures which also considerably limit the possibility of increasing speed, as it has only three speed adjustment sections, unlike the invention in which a plurality of adjacent sections can be arranged to adjust the speed and with a simpler and, therefore, more cost-effective and reliable structure.

### Description of the invention

In order to achieve the objectives and solve the problems mentioned above, the invention consists of a mechanical carpet for transport lines, characterised in that it comprises at least one section of a pre-set length, having a plurality of parallel guides forming a round trip loop, on each one thereof runs a displaceable element, which has a succession of chain-linked links, in such a way that they form the round trip loop on the guide, and where the upper surfaces of the outbound section of each displaceable element are arranged close to each other, in such a way that they establish a resting surface for the transport of persons and/or objects in the outbound section. In addition, the invention includes a simultaneous traction mechanism for driving all the displaceable elements on each of their guides at the same speed to enable said transport to be carried out.

The traction mechanism has a motor for driving a plurality of drive wheels, one for each parallel guide, which have perimeter recesses into which there are inserted pins used to attach the different links of the displaceable elements, in such a way that the simultaneous traction of the displaceable elements over the guides is carried out.

Each of the drive wheels is arranged at one of the ends of each of the guides, which enables the path of the loop of the displaceable elements to be guided at said ends.

In a first embodiment of the invention, the ends of the guides that are opposite the ends that include the drive wheels form a semicircular configuration that enables the return path of the loop of the displaceable elements to be guided at said ends of the guides that are opposite the end at which the drive wheels are arranged.

In a second embodiment of the invention, the ends of the guides that are opposite the ends that include the drive wheels have freely-rotating wheels equivalent to the drive wheels and which rotate idly on the common shaft with the next section.

The guides are integral with a frame comprising lateral extensions for resting and fastening on supports fixed to the surface on which the transport line is installed.

One embodiment of the invention comprises at least three adjacent sections, where the traction mechanism of the displaceable elements of the end sections for entry and exit is configured to drive said displaceable elements with a speed V1, which has been selected in such a way that It enables the entry/exit of persons and/or objects to be carried out in a manner that is safe. In addition, the traction mechanism for the displaceable elements of the section adjacent to the end sections for entry and exit is configured to drive said displaceable elements with a speed greater than speed V1, in such a way that the transport time is reduced.

In accordance with the foregoing, it is possible for the invention to comprise a plurality of adjacent sections arranged between the end sections for entry and exit, in which the traction mechanism thereof is configured to drive the displaceable elements at speeds greater than V1, which enables progressive changes in speed to be made in the different consecutive sections in a manner that is safe and feasible for the transported persons, further reducing the transport time, as the number of adjacent sections increases. For example, in the sections proximal to the section for entry, the speed can increase progressively, and in the sections proximal to the section for exit (sections distal to the section for entry), the speed can be gradually decreased, in such a way that the speed of the section adjacent to the section for exit reaches an adequate speed (greater than V1) to enable the passage of persons and/or objects to the section for exit without the risk of an accident. This configuration makes it possible to increase the length of the transport lines, increasing their drive speed.

In the above cases, the parallel guides of each section are provided to be arranged in an offset alignment in relation to the guides of the adjacent sections, alternating the guides of one section with those of the adjacent ones to avoid interference in the displacement of the displaceable elements of the different adjacent sections.

The drive wheels are provided to be housed in first slots provided at the ends of consecutive sections, and the ends having a semicircular configuration of consecutive sections, or the wheels that rotate idly, are housed in second slots of adjacent sections to avoid interference in the displacement of the displaceable elements of adjacent sections.

The ends of the frames of each section comprise lugs with complementary tongue-and-grooving configured to enable the coupling and attachment between the different sections.

The attachment between the different sections is carried out by means of a shaft of the traction mechanism which meshes with the motor and runs from one side of the frame to the opposite side, passing through the lugs by means of bearings that enable it to rotate. In addition, the plurality of drive wheels are fixed to the shaft to carry out the simultaneous traction of all the displaceable elements of each section. Said shaft has alternating areas in correspondence with the idler wheels, which are perfectly cylindrical, to enable the idler wheels to rotate freely.

In addition, the consecutive sections can be attached with a certain inclination, in such a way that transport between areas with different heights is enabled, as may be the case in which it is necessary to overcome unevenness in the terrain, or make a change of level between floors of a building.

It is also provided that there may be at least one parallel lateral section for the entry/exit of persons to the transport line which is displaced with the mentioned speed V1 of the sections for entry/exit to enable the arrangement of areas for entry and exit along the transport line.

The described configuration also has the advantage that the frames of the carpet can be assembled and disassembled to cover temporary displacements in places where it may be necessary.

In addition, the described configuration enables the passage from one section to another without interruption, as the planes formed by the upper surfaces of the links forming the displaceable elements of adjacent sections coincide, and it also enables two adjacent sections to be arranged forming a certain angle.

### Description of the figures

To complete the description, and for the purpose of helping to make the features of the invention more readily understandable, this description is accompanied by a set of figures constituting an integral part of the same, which by way of illustration and not limitation represents the following:
Figure 1 shows an exploded perspective view of two consecutive sections in which the way in which their attachment and traction mechanism are carried out can be seen. In this figure, two chain-linked links have been represented, in an exploded view, to form the displaceable elements which run on the guides.
Figure 2 shows a perspective view of the previous figure with the two consecutive sections attached, resting and being fastened on supports fixed to the surface on which the transport line is installed. In this figure, the displaceable elements, among others, have been omitted to facilitate the understanding of the configuration of the invention.
Figure 3 shows a perspective view of the detail of the attachment of a section of the mechanical carpet of the invention, in which it is possible to see the arrangement of two sections of two displaceable elements on the guides which are made up of a succession of chain-linked links.
Figure 4 shows a side view of the arrangement of two displaceable elements of two adjacent sections.
Figure 5 shows a schematic plan view of the arrangement of a parallel lateral section through which the entry/exit of persons and/or objects from the transport line in an area of the transport line different from the sections for entry and exit is enabled, in such a way that it is possible to establish areas for entry and exit along the transport line.
Figure 6 shows a partial schematic representation of a possible embodiment of the arrangement of a plurality of sections with their corresponding railings.
Figure 7 represents a view similar to Figure 1, where idler wheels instead of semicircular configurations stand out.

### Preferred embodiment of the invention

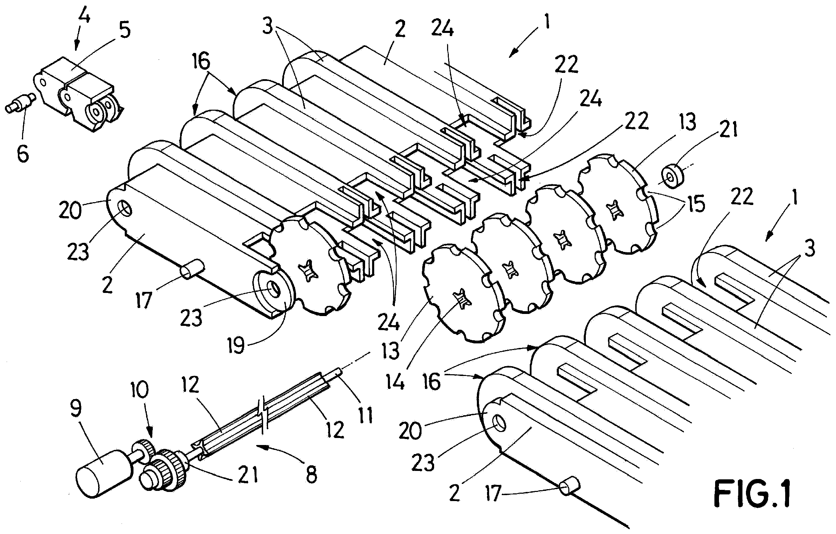

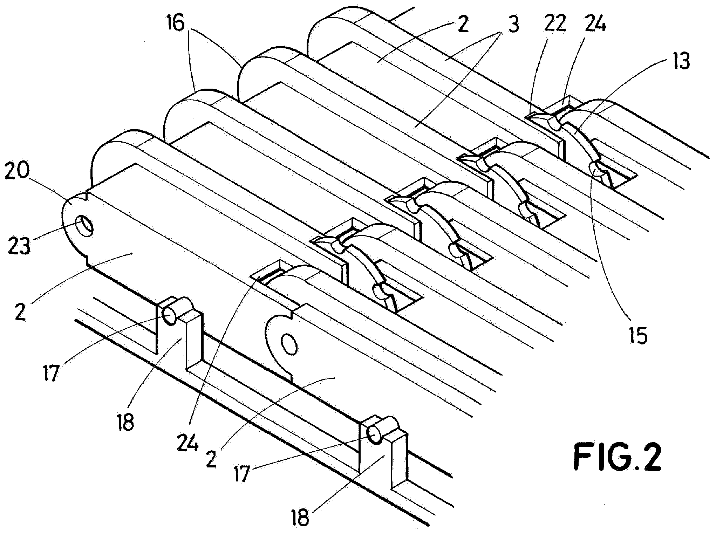

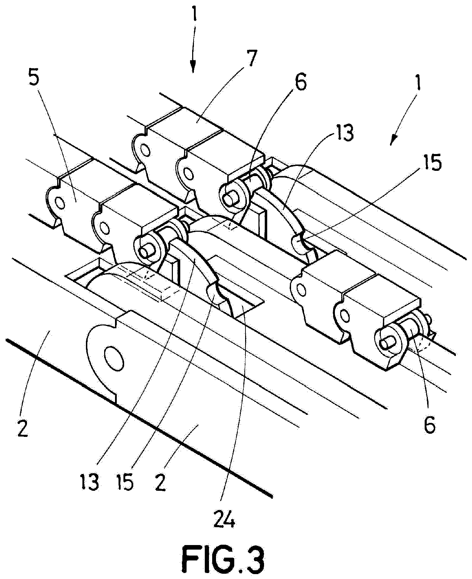

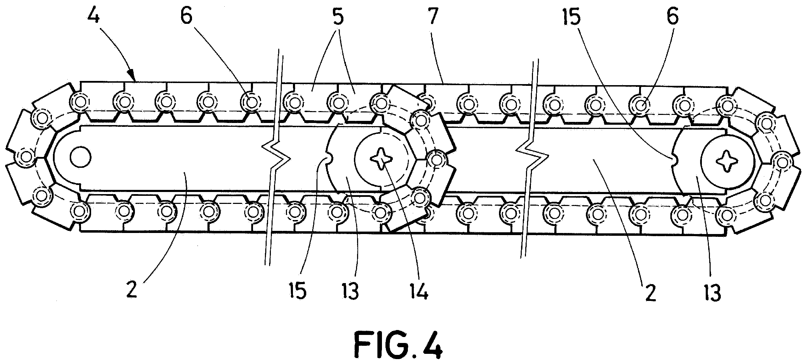

Below is a description of the invention based on the aforementioned figures, showing a mechanical carpet configuration made up of a plurality of adjacent sections 1, each of which comprises a frame 2 that has a plurality of parallel guides 3 forming a round trip loop. On each one of the guides 3 there runs a displaceable element 4 made up of a succession of chain-like links 5 attached by means of a pin 6. The separation between the parallel guides 3 establishes that the upper surfaces 7 of the links 5 of the displaceable elements 4 of the different guides 3 are arranged close to each other, in such a way that in the outbound section they form an upper resting surface 7 on which the transport of persons and/or objects is enabled. The guides 3 of each adjacent section are arranged out of phase, alternating the guides of one section with those of the adjacent section, in such a way that the links of adjacent sections intersect in such a way that interference is avoided in the displacement of said links 5 of the displaceable elements 4 of consecutive sections 1, as explained below. For this, the separation between parallel guides and the width of the links 5 is configured to enable the transport of persons and/or objects and to enable the interlocking between the displaceable elements of adjacent sections, as can be seen in Figures 1 to 4.

The displaceable elements 4 of each section are driven by means of a traction mechanism 8 which comprises a motor 9 which meshes with pinions 10 that are integral with a shaft 11, in which a plurality of drive wheels 13 are fixed, so said shaft 11 has cross-shaped projections 12 which fit and are retained in a hole 14 with cross-shaped extensions made in the drive wheels 13. Each of said drive wheels is arranged at one of the ends of the parallel guides 3, and they comprise perimeter recesses 15 into which there are inserted, when the motor 9 rotates, pins 6 of the links 5 of the displaceable elements 4, in such a way that the driving of the motor 9 causes the simultaneous traction of the displaceable elements 4, at a constant speed, to carry out the transport of the persons and/or objects that are arranged on the upper surface 7 of the links 5 of the outbound section of the frame 2. The drive wheels 13 also make it possible to carry out the return path of the displaceable elements 4 to start a new outbound path for the transport of persons and/or objects.

To do this, in a first embodiment of the invention, the ends of the parallel guides 3 that are opposite the ends comprising the drive wheels 13 have a semicircular configuration 16 along which there run displaceable elements 4 to close the loop.

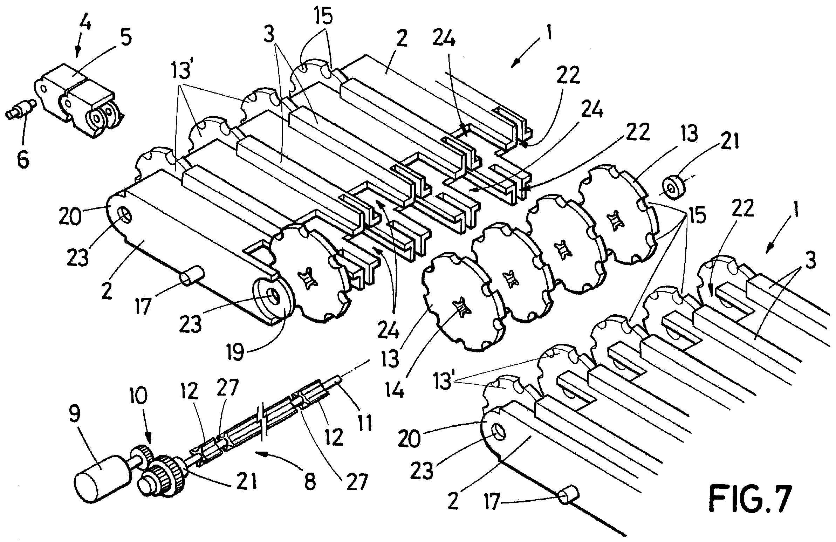

In a second embodiment of the invention such as the one shown in Figure 7, instead of the semicircular configuration 16 that is part of the parallel guides 3, there are installed freely-rotating idler wheels 13', equivalent to the drive wheels 13, on which there also run displaceable elements 4.

For this, said idler wheels 13' are also coupled to each shaft 11 in alternation with the drive wheels 13, in such a way that the idler wheels 13' are coupled to cylindrical sections 27 that interrupt the continuity of the cross-shaped projections 12 in which drive wheels 13 are coupled. In this second described embodiment, during the mobility of each of the displaceable elements 4 in the form of a chain, the idler wheel 13' rotates freely, whereby the operation is smoother as there is less friction.

Moreover, it should be noted that the displaceable elements 4 in the form of a chain run along the guides 3, contacting at least the pins 6 of the upper branch of each displaceable element 4 on the outbound loop of the guide 3, in such a way that said pins 6 can also have idle rotation and, therefore, each displaceable element 4 in the form of a chain runs along the outbound loop of the guide 3 with rolling contact, thus achieving less friction and, therefore, a better and smoother operation of the carpet of the invention.

The ends of the frames 2 have lugs 19 and 20 with complementary tongue-and-grooving, by means of which the attachment between the different sections 1 making up the mechanical carpet is carried out. This attachment is made by means of the shaft 11 going through holes 23 of the complementary lugs 19 and 20 of two adjacent frames 2 in which they are retained by means of bearings 21 that enable the rotation of the shaft 11 when driving the motor 9. This configuration prevents any type of displacement between two adjacent frames.

To enable the interlocking between the displaceable elements 4 of adjacent sections, the drive wheels 13 are located in first slots 22 provided at the ends of the frames 2 of each adjacent section 1, and the semicircular configurations 16 or idler wheels 13' of the end opposite to that of the drive wheels of the guides 3 are housed in second slots 24 of the adjacent sections provided at the corresponding end of the frame, enabling the frames to be coupled and attached together, as described, without causing interference between the displaceable elements arranged in the guides 3 of adjacent frames 2.

The frames 2 have lateral extensions 17 which rest and are fastened on supports 18 fixed to the surface on which the transport line is installed, in such a way that the return section of the links 5 is at a level lower than that of the links of the transport elements of the outbound section, whose upper surface makes up the transport surface.

The described configuration enables the different adjacent sections 1 to be attached with a certain inclination, in such a way that they enable transport between areas with different heights and can be adapted to different unevenness that may exist in the terrain on which the transport line is installed, such as enabling transport between different floors of a building.

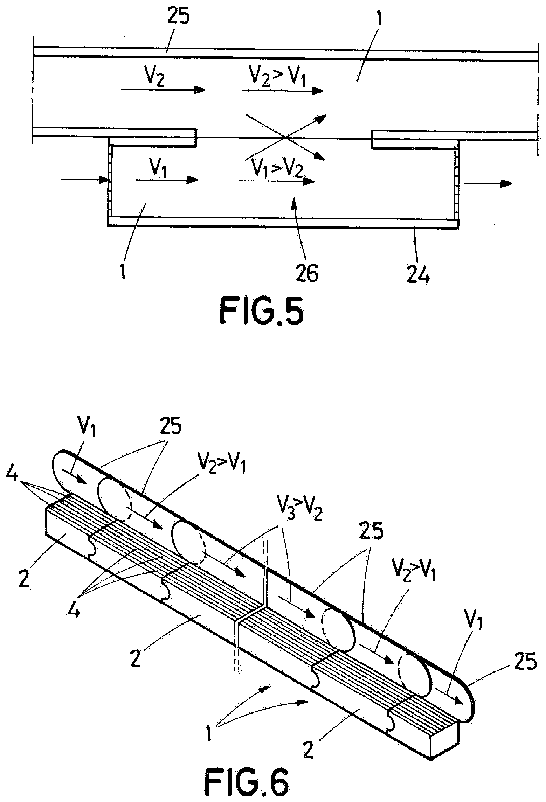

The different sections 1 also have a conventional belt 25, represented in Figures 5 and 6, configured to slide on a conventional railing, which meshes with the motor 9 to enable the transported persons to hold on during transport as occurs in conventional transport lines for persons, with the same speed in the railing as in the corresponding carpet itself.

In one embodiment, the transport line comprises at least three adjacent sections that run at different speeds having a constant value, such that the end sections run at a constant speed V1 that enables the entry and exit of persons and/or objects in a manner that is safe, and the section arranged between said sections for entry and exit maintains a constant speed V2 greater than V1, in such a way that the speed of the transport line increases progressively, which makes it possible to reduce the transport time.

There is provided the possibility of including successive sections arranged between the sections for entry and exit, in such a way that in a possible embodiment, said sections are designed to maintain the same speed V2, enabling transport distances to be increased with a higher speed.

In addition, the sections arranged between the sections for entry and exit can be configured to progressively vary the speed V1, in such a way that in the sections proximal to the section for entry, the speed increases progressively as they move away from said section for. entry, and in the sections distal to the section for entry (proximal to the section for exit), the speed decreases progressively as they approach the section for exit, in such a way that progressive changes in speed are provided, as shown, for example, in Figure 6. Since the invention has sections that enable the speed to increase progressively as the length of the line and the number of consecutive sections that form it increase, it enables the value of the speed V1 of the sections for entry and exit to be very low to provide greater entry-exit safety for all types of persons, and all of this enables the transport time on the transport line to be reduced considerably as the number of sections increases.

Obviously, the sections arranged between the sections for entry and exit can also intercalate sections that maintain or reduce speed in relation to the sections to which they are adjacent, according to the needs of each transport line, for example to establish parallel lateral sections 26 for entries/exits in a transport line, as shown in Figure 5, in which there is provided a parallel lateral section 26 with respect to the transport line through which the entry and exit of persons is enabled.

The invention also provides that the mechanical carpet can be made up of a single section with the described configuration, the length of which corresponds to the distance that persons and/or objects must be transported, which is especially applicable in transport lines having a short length.

## Claims

1. Mechanical carpet for transport lines, comprising several adjacent sections (1) of a pre-set length, each of which has:
- a frame that includes a plurality of parallel guides (3) forming a round trip loop, on each one thereof it runs;
- a displaceable element (4), having a succession of chain-linked links (5), forming the loop on the guide, where the upper surfaces (7) of each displaceable element of the outbound section establish a surface for the transport of persons and/or objects;
- a simultaneous traction mechanism (8) for all the displaceable elements on each of their guides;
where
- the traction mechanism comprises a motor (9) for driving a plurality of drive wheels (13), one for each parallel guide, each of which comprises perimeter recesses (15) into which there are inserted pins (6) for attaching the links of the displaceable elements when the motor turns to drive the displaceable elements over the guides;
- each of the drive wheels is arranged at one of the ends of each of the guides to guide the path of the loop of the displaceable elements at said ends;
- the parallel guides of each section are arranged in an offset alignment in relation to the guides of the adjacent sections, alternating the guides of one section with those of the adjacent ones to avoid interference in the displacement of the displaceable elements of the different adjacent sections;
**characterised in that**:
- the ends of the guides opposite the ends that include the drive wheels comprise guide structures for the path of the loop of the displaceable elements at said ends of the guides, opposite the end at which the drive wheels are arranged; where said guide structures are selected from semicircular configurations (16) and freely-rotating idler wheels (13');
- the drive wheels are housed in first slots (22) provided at the ends of adjacent sections, and the ends with the guide structures are housed in second slots (24) of adjacent sections;
- the ends of the frames of each section comprise lugs (19, 20) with complementary tongue-and-grooving for the coupling and attachment between the different sections;
- the attachment between the different sections is carried out by means of a shaft (11) of the traction mechanism which meshes with the motor (9) and runs from one side of the frame to the opposite side, passing through the complementary lugs (19, 20 ) by means of bearings (21) that enable it to rotate, the plurality of drive wheels (13) being fixed on said shaft (11).

2. Mechanical carpet according to claim 1, where the shaft (11) has areas that alternate a grooving formed by cross-shaped projections (12) for driving the drive wheels (13) and cylindrical sections (27) for the coupling of the freely-rotating idler wheels (13').

3. Mechanical carpet according to any one of the preceding claims, where the frame (2) comprises lateral extensions (17) for resting and fastening on supports (18) fixed to the surface on which the transport line is installed.

4. Mechanical carpet according to any one of the preceding claims, comprising at least three adjacent sections, where the traction mechanism for the displaceable elements of the end sections are configured to drive said displaceable elements with a speed V1 that enables the entry/exit of persons and/or objects; and where the traction mechanism for the displaceable elements of the section adjacent to the end sections is configured to drive said displaceable elements with a speed greater than the speed V1 of the end sections, to reduce the transport time.

5. Mechanical carpet according to claim 4, comprising a plurality of sections arranged between end sections for entry and exit, whose traction mechanisms are configured to drive the displaceable elements at speeds greater than V1, and to enable progressive changes in speed.

6. Mechanical carpet according to any one of the previous claims, where the consecutive sections are attached with a certain inclination to enable transport between areas with different heights.

7. Mechanical carpet according to any one of the preceding claims, comprising a parallel lateral section (26) for the entry/exit of persons with a speed V1.

8. Mechanical carpet according to any one of the preceding claims, **characterised in that** the pins (6) of the displaceable elements (4) have an idle rotation; where each displaceable element (4) in the form of a chain runs along the outbound loop of the guide (3) and over the guide structure with rolling contact.
